# FASCICULE DE BREVET EUROPEEN

(11) **EP 0 524 849 B1**
(45) Date de publication et mention de la délivrance du brevet: **27.09.1995**
(21) Numéro de dépôt: 92401862.5
(22) Date de dépôt: 30.06.1992
(51) Int. Cl.: F16B 7/04

(54) **Dispositif d'assemblage de profilés**
Vorrichtung zum Zusammenbau von Profilschienen
Profile assembly device

(30) Priorité: 25.07.1991 FR 9109435
(43) Date de publication de la demande: 27.01.1993
(73) Titulaire: Yermakoff, Michel, F-77270 Villeparisis (Seine & Marne) (FR)
(72) Inventeur: Yermakoff, Michel, F-77270 Villeparisis (Seine & Marne) (FR)
(74) Mandataire: Cabinet HERRBURGER

(56) Documents cités:
- CA-A- 1 223 426
- DE-A- 1 475 048
- FR-A- 2 352 200
- FR-A- 2 636 381
- FR-A- 2 647 859

## Description

La présente invention concerne un dispositif d'assemblage d'un premier et d'un second profilé dirigés suivant deux directions sécantes, selon le préambule de la revendication 1.

Un tel dispositif d'assemblage est déjà connu notamment selon les documents antérieurs FR-A-2 636 381.

Toutefois, ces dispositifs d'assemblage connus sont d'une réalisation relativement délicate, nécessitent des opérations multiples de fabrication et des précautions pour leur mise en place. Dans certains cas les organes d'assemblage ne permettent pas un assemblage particulièrement résistant aux vibrations.

Il est également connu selon le document FR-A-2 352 200 un assemblage d'un tube et d'une traverse à l'aide d'une fourche à extrémités recourbées pour venir dans le tube. Dans la fourche il y a une pièce d'écartement mise en place avant que le tube ne soit emmanché sur la fourche. Puis on introduit une came pour tendre la fourche et serrer l'assemblage.

Cet assemblage présente un certain nombre d'inconvénients qui en limitent considérablement l'emploi :
Il ne permet pas la mise en place d'un tube ou traverse entre deux tubes déjà installés. Cela est grave tant pour le montage que pour le démontage.

La présente invention a pour but de remédier à ces inconvénients et concerne à cet effet un dispositif d'assemblage correspondant au type défini ci-dessus, caractérisé par les caractéristiques de la revendication 1.

La présente invention sera décrite ci-après de manière plus détaillée à l'aide des dessins annexés dans lesquels :
- la figure 1 est une vue simplifiée de deux organes de liaison engagés dans chaque extrémité d'une traverse d'un dispositif d'assemblage selon l'invention.
- la figure 2 montre la disposition en section des deux profilés parallèles en position d'attente pour recevoir la traverse de la figure 1.
- la figure 3 montre l'assemblage d'une traverse à deux profilés parallèles représentés en coupe, selon les figures 1 et 2.
- la figure 4 est une vue de détail de la moitié d'un assemblage analogue à celui de la figure 3.
- les figures 5 et 6 sont une vue en coupe et en perspective d'un organe de liaison selon la figure 4.
- la figure 7 est une vue schématique du mouvement d'introduction d'un organe de liaison derrière les ailes d'un profilé.

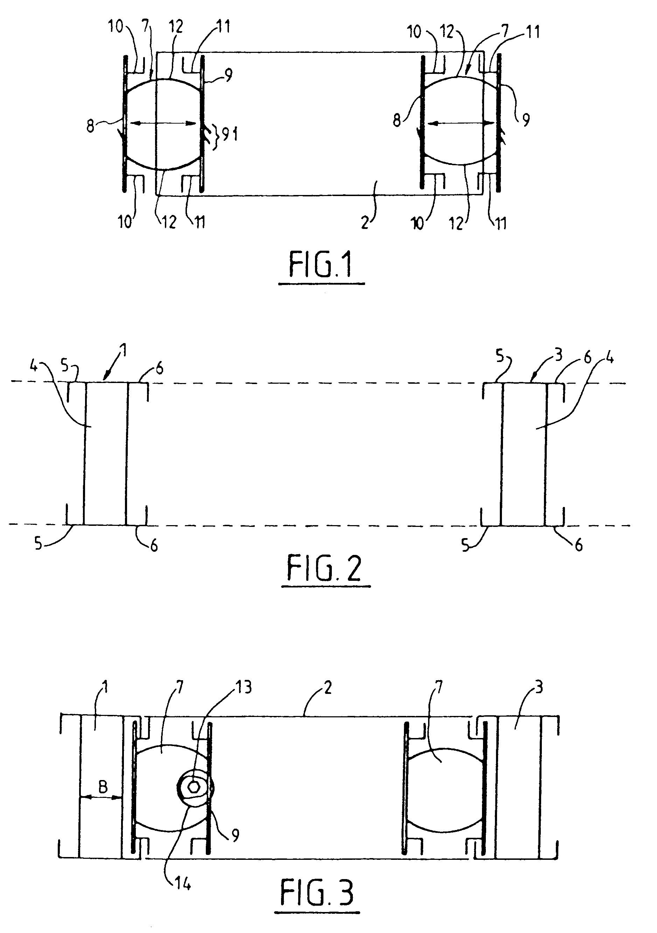

Selon les figures 1, 2, 3, le dispositif d'assemblage de l'invention est destiné à l'assemblage d'un premier profilé 1 et d'un second profilé 2. En fait, cet assemblage se limite à cette seule connexion entre deux profilés destinés à s'appuyer l'un contre l'autre par leur surface d'appui sous l'action d'une pièce de liaison accrochée au premier profilé 1 et s'accrochant au second profilé 2 pour tirer ce dernier contre le premier profilé. En effet, cet assemblage fait nécessairement intervenir un troisième profilé 3 parallèle au premier profilé 1, le second profilé 2 constituant une traverse reliant les profilés 1, 3. Selon le cas le plus fréquent, les profilés 1, 3 sont des profilés verticaux et la traverse 2 est horizontale. L'inverse est également possible, les profilés 1 et 3 sont horizontaux et la traverse 2 verticale.

Dans un cas extrême, les profilés 1, 3 ne sont ni verticaux ni horizontaux mais inclinés et le profilé transversal ou traverse 2 coupe la direction des profilés 1, 3.

Quelle que soit l'orientation réelle des profilés 1, 2, 3, seul importe que les profilés 1, 3 soient parallèles et que le profilé 2 constitue une traverse, usuellement mais non nécessairement perpendiculaire à la direction des profilés 1, 3. Dans l'exemple représenté aux figures, pour simplifier le dessin, on suppose cette orthogonalité.

Les profilés 1 et 3 ont la même section, aussi la description se limitera-t-elle à la description du profilé 1, les mêmes références étant utilisées pour désigner les parties constitutives correspondantes du profilé 3.

Le profilé 1 est constitué dans sa version la plus simplifiée par une section rectangulaire 4 bordée à chacun de ses coins par un crochet 5, 5 et 6,6. En fait les crochets 5, 5, 6, 6 définissent un contour rectangulaire entourant la partie 4.

Les crochets 5, 5 et 6, 6 constituent les ailes du profilé 1.

Comme indiqué ci-dessus le profilé 3 présente la même section et il comporte un corps 4 avec, en position homologue, des ailes 5, 5 et 6, 6.

Bien que les ailes ou crochets 5 et 6 soient identiques, pour faciliter la description on utilisera des références différentes pour les crochets de chaque face du profilé.

L'organe de liaison 7 qui relie chaque extrémité de la traverse 2 aux profilés 1, 3 est constitué par une face latérale 8, 9 identique mais d'orientation différente comme cela apparaîtra ci-après. La face 8 est matérialisée par un trait 81 et la face 9 par un double trait 91, ces traits ou marques 81, 91 étant réalisés en même temps que le profilé.

L'organe de liaison 7 est, comme cela apparaîtra ultérieurement, une tranche coupée en biais d'un profilé à la section décrite ci-dessus, c'est-à-dire qu'elle se compose de deux faces latérales 8, 9 bordées à chaque extrémité par un crochet 10, 10, 11, 11. Ces crochets sont identiques mais pour faciliter la description les crochets de la face 8 et ceux de la face 9 portent des références différentes. Enfin, les faces 8, 9 sont reliées par des branches 12, constituant des organes de liaison élastiques entre les faces 8, 9. Ces branches 12 sont incurvées ou bombées vers l'extérieur suivant un profil en tonneau. Cela donne une certaine élasticité à la tranche 7 de profilé permettant son extension dans la direction de la double flèche A sous l'effet de la came non représentée assurant le serrage.

L'épaisseur de l'organe de liaison 7 correspond sensiblement à la hauteur B du corps 4 des profilés 1, 2, 3 dans la mesure où ces profilés sont identiques ou à la hauteur B de la partie correspondante du profilé 2, si ce profilé est différent des profilés 1 et 3 puisqu'il faut glisser l'organe de liaison 7 dans le corps 4 du profilé 2

Cet organe de liaison 7 est introduit par coulissement dans l'extrémité correspondante de la traverse 2 pour que suivant l'orientation choisie aux dessins, la face 8 soit tournée vers le profilé 1 et la face 9 vers le profilé 3 (figure 1).

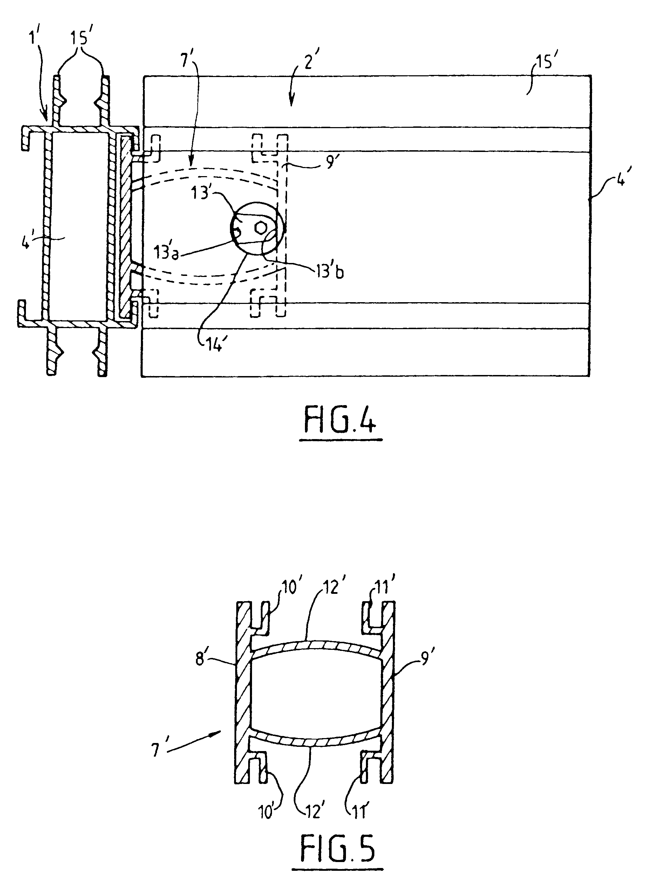

Selon la figure 3, les faces 8, 9 viennent respectivement derrière les crochets 6, 6 et 5, 5 des profilés 1, 3. Cette mise en place se fait par pivotement de la traverse équipée de ses deux organes de liaison 7, 7 par pivotement autour de l'axe longitudinal XX de Ta traverse 2 comme cela sera décrit en liaison avec la figure 4.

Par ce pivotement de la traverse 2 munie des deux organes de liaison 7 on fait venir les faces 8, 9 dans la cavité délimitée par les crochets 6, 5, librement, puisque la traverse 2 est alors orientée sensiblement à l'équerre autour de l'axe XX par rapport à l'orientation représentée à la figure 1. Après ce positionnement, on fait pivoter la traverse 2 de 90° en sens inverse pour engager les bords des faces 8, 9 derrière les crochets 6, 5 respectifs.

Lorsque cette mise en place est faite, il faut serrer l'une des faces de la traverse 2 contre le profilé 1 et l'autre face de la traverse 2 contre le profilé 3. Pour cela, en maintenant en place la traverse 2 dans la position appropriée par rapport aux profilés 1 et 3, on fait pivoter la came 13 de manière qu'elle s'appuie sur les bords de l'orifice 14 réalisé, dans une position correspondante, de l'extrémité de la traverse 2, et s'applique contre la face intérieure de la face 9 de l'organe de liaison 7 associé au montant 1 ; de la même façon on pivote la came de l'autre organe de liaison 7 s'appliquant contre la face intérieure 8 de l'organe de liaison 7 associé au montant 3. Le mouvement de pivotement de chaque came exerce une traction qui tire respectivement la traverse 2 contre le montant 1, 3 correspondant. En fin de course, on est au blocage. La dimension des pièces, notamment de la came, de son logement à l'extrémité respective de la traverse 2 et les jeux des organes de liaison 7 sont choisis pour arriver à ce serrage.

Les cames ont une surface d'appui aplatie qui vient s'appuyer contre la face intérieure correspondant de l'organe de liaison 7, pour éviter que les vibrations ne puissent faire pivoter les cames et desserrer les liaisons.

Il est à remarquer que les crochets 10, 11 qui viennent par-dessus les ailes ou crochets 5, 6 des profilés 1, 3 servent en même temps d'organes d'appui intérieurs pour les bords de la traverse 2.

Il est possible de modifier la forme de l'organe de liaison 7 et dans le cas le plus simple d'une section d'organe de liaison 3, cet organe se compose simplement de faces 8, 9 sans les crochets 10, 11 du mode de réalisation des figures 1A, 1B, 2 et avec seulement les branches 12 de liaison.

Cette variante d'organe de liaison 7 non représentée vient certes derrière les ailes 6, 5 des montants 1, 3 lorsqu'il est utilisé de façon analogue à l'organe de liaison 7 des figure 1, 2, 3. Toutefois, il ne comporte pas les crochets de profilé qui viennent devant les ailes 6, 5. Cela facilite la réalisation du profilé dans lequel est coupée la tranche 7 formant l'organe de liaison mais cela rend plus délicates les opérations d'assemblage de la traverse 2 et des montants 1, 3.

La figure 4 est une vue analogue à celle de la figure 1 mais montrant seulement la jonction de la traverse 2' et du montant 1'. Cette figure montre en particulier la came 13' placée dans le logement 14' double, réalisé dans les deux faces du corps 4' du profilé 2'. Ce profilé formant la traverse 2' ainsi que le montant 1' ont une section plus compliquée que celle représentée aux figures 1A, 1B, 2 car dans le sens de la longueur, la section rectangulaire 4'est prolongée par deux bandes 15' servant à la fixation d'organes d'habillage tels que des couvre-joints ou analogues.

Cette figure 4 montre que la face 13'a de la came présente une courbure correspondant sensiblement à la courbure de l'orifice 14' alors que la surface de came 13'b qui s'appuie contre la face correspondante 9' de l'organe de liaison 7' constitue une surface de came avec un méplat pour stabiliser la position de serrage et éviter tout desserrage par exemple sous l'effet de vibrations qui pourraient provoquer un léger basculement de la came. Grâce à ce méplat, l'assemblage est stable et non seulement métastable.

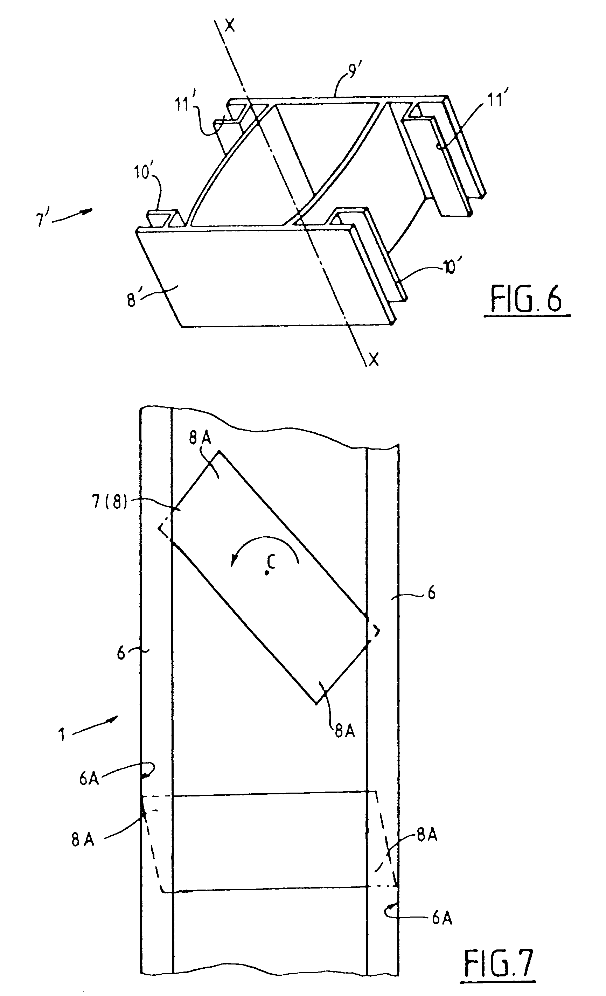

Les figures 5 et 6 montrent en coupe et en perspective un organe de liaison 7' ayant la section de celui de la figure 2, la figure 6 montrant la coupe en biais de cet organe de liaison 7' par rapport à l'axe XX du profilé.

En fait, selon la figure 6, le profilé dans lequel aura été coupée cette tranche constituant l'organe de liaison 7 est incliné puisque les plans de coupe sont, selon le dessin de la figure 6, horizontaux.

De façon générale, on utilisera les mêmes références aux figures 4, 5, 6 qu'aux figures 1, 2, 3 pour désigner les mêmes éléments en les accompagnant d'un prime' mais sans en reprendre la description.

La figure 7 montre la façon d'engager la face correspondante, par exemple la face 8 de l'organe de liaison 7 dans le profilé 1, c'est-à-dire derrière les ailes 6. Pour cela, on part de l'orientation "verticale" de l'organe de liaison 7 introduit dans l'extrémité correspondante de la traverse (à chaque extrémité) et en respectant l'orientation définie ci-dessus pour permettre précisément le pivotement qui sera décrit ci-après.

Partant de cette position verticale, on pivote la traverse et ses deux organes de liaison 7 dans le sens de la flèche C (sens inverse de celui des aiguilles d'une montre, angle de 90°) pour arriver à la position représentée en bas à la figure 7. Dans cette position, les coins "aigus" 8A de la face 8 en forme de parallélogramme du profilé viennent buter contre la surface intérieure 6A de la cavité du montant 1 et bloquent ainsi le mouvement de pivotement dans la position horizontale.

Si le choix et surtout la précision de la découpe sont faits correctement, c'est-à-dire si la longueur du rectangle circonscrit au parallélogramme de la face 8(9) de l'organe de liaison correspond bien et de manière relativement précise à la largeur libre intérieure du montant, derrière les crochets, l'organe de liaison s'arrête alors en position horizontale par rapport au profilé 1, vertical.

Cette mise en butée est intéressante pour faciliter les travaux d'assemblage.

Il convient de remarquer une nouvelle fois que les organes de liaison 7 à chaque extrémité de la traverse 2 sont identiques mais doivent être introduits dans l'extrémité de la traverse dans des positions homologues précisément pour permettre le pivotement de 90° à la fois à l'assemblage et aussi au démontage.

Selon la pratique, la hauteur ou "largeur" du rectangle circonscrit au parallélogramme de la tranche constituée par l'organe de liaison correspond sensiblement à la hauteur B (fig. 3) du corps du profilé dans lequel doit être introduit cet organe de liaison.

Enfin, il est à remarquer que selon l'invention, l'expression « came » a un sens général et peut le cas échéant être représentée par une vis à tête fraisée et un écrou conique qui, par serrage, créent un effet de came.

## Revendications

1. Dispositif d'assemblage comprenant un premier (1) et un second (2) profilés dirigés suivant deux directions sécantes, les profilés (1, 2) étant tirés l'un contre l'autre par un organe de liaison (7) s'accrochant aux ailes (6) du premier profilé (1) et comportant une came (13) prenant appui dans un orifice de l'organe de liaison (7) et dans un orifice (14) de l'une des faces du second profilé (2), non parallèle à sa face d'appui, la came (13) écartant par son pivotement, les bords antagonistes des deux orifices pour tirer les profilés (1, 2) l'un contre l'autre, l'organe de liaison étant une tranche de profilé, dispositif caractérisé en ce que :
- l'organe de liaison (7) est une tranche de profilé coupée en biais par rapport à l'axe (XX) du profilé suivant un angle choisi pour que la longueur du rectangle circonscrit au parallélogramme constitué par chaque face (8, 9) de l'organe de liaison (7) corresponde à la largeur intérieure du premier profilé (1).
- les deux faces (8, 9) sont reliées par des branches (12) constituant une liaison élastique et bordant l'orifice de l'organe de liaison,
- les bords d'une face (8) de l'organe de liaison (7) prennent appui derrière les ailes (6) du premier profilé (1) et la came (13) s'appuyant contre la face intérieure (9) de l'organe de liaison (7).

2. Dispositif d'assemblage selon la revendication 1, caractérisé en ce que les bords des faces (8, 9) de l'organe de liaison (7) sont bordés intérieurement par des crochets (10, 11) destinés à venir par-dessus les ailes (6) de l'autre profilé (1, 3) de l'assemblage.

3. Dispositif d'assemblage selon la revendication 1, caractérisé en ce que les branches (12) reliant les deux faces (8, 9) sont incurvées de manière concave.

## Claims

1. Assembly device comprising a first (1) and a second (2) sectional member which are directed along two intersecting directions, the sectional members (1, 2) being drawn against each other by a linkage element (7) hooking onto the flanges (6) of the first sectional member (1) and including a cam (13) bearing in an orifice in the linkage element (7) and in an orifice (14) in one of the faces of the second sectional member (2), not parallel to its bearing face, the cam (13), by means of its pivoting action, moving the opposing edges of the two orifices apart in order to draw the sectional members (1, 2) against each other, the linkage element being a portion of sectional member, which device is characterized in that:
- the linkage element (7) is a portion of sectional member cut obliquely with respect to the axis (XX) of the sectional member at an angle chosen so that the length of the rectangle circumscribed in the parallelogram formed by each face (8, 9) of the linkage element (7) corresponds to the internal width of the first sectional member (1);
- the two faces (8, 9) are connected by branches (12) forming an elastic linkage and bordering the orifice in the linkage element;
- the edges of one face (8) of the linkage element (7) bear behind the flanges (6) of the first sectional member (1) and the cam (13) bearing against the internal face (9) of the linkage element (7).

2. Assembly device according to Claim 1, characterized in that the edges of the faces (8, 9) of the linkage element (7) are internally bordered by hooks (10, 11) intended to go over the top of the flanges (6) of the other sectional member (1, 3) of the assembly.

3. Assembly device according to Claim 1, characterized in that the branches (12) connecting the two faces (8, 9) are curved in a concave manner.

## Patentansprüche

1. Zusammenbauvorrichtung aufweisend: eine erste (1) und eine zweite Profilschiene (2), welche in zwei einander schneidenden Richtungen ausgerichtet sind, wobei die Profilschienen (1, 2) durch eine Verbindungseinrichtung (7) aufeinander zu gezogen werden, welche in die Profilschenkel (6) der ersten Profilschiene eingehängt ist und einen Nocken (13) aufweist, welcher sich in einer Öffnung der Verbindungseinrichtung (7) und in einer Öffnung (14) in einer der zur Auflagefläche nicht parallelen Wangen der zweiten Profilschiene (2) abstützt, und durch Schwenken des Nockens (13) die einander abgewandten Ränder der beiden Öffnungen voneinander entfernt werden, um die Profilschienen (1, 2) aufeinander zu zuziehen, und die Verbindungseinrichtung eine abgeschnittene Profilscheibe ist,
dadurch **gekennzeichnet**,
- daß die Verbindungseinrichtung (7) eine Profilscheibe ist, welche bezüglich der Profilachse (XX) unter einem Winkel abgeschnitten ist, welcher so gewählt ist, daß die Länge des Rechtecks, das dem durch jede Wange (8, 9) der Verbindungseinrichtung (7) gebildeten Parallelogramm umbeschrieben werden kann, der Innenweite der ersten Profilschiene (1) entspricht,
- daß die beiden Wangen (8, 9) durch zwei Abschnitte (12) verbunden sind, die eine elastische Verbindung bilden und die Öffnung der Verbindungseinrichtung (7) einfassen,
- daß sich die Kanten einer Wange (8) der Verbindungseinrichtung (7) hinter den Profilschenkeln (6) der ersten Profilschiene (1) abstützen und sich der Nocken (13) gegen die innenliegende Wange (9) der Verbindungseinrichtung (7) abstützt.

2. Zusammenbauvorrichtung nach Anspruch 1,
dadurch **gekennzeichnet**,
daß die Kanten der Wangen (8, 9) der Verbindungseinrichtung (7) an der Innenseite durch Haken (10, 11) begrenzt werden, welche dazu bestimmt sind, über den Profilschenkeln (6) der anderen Profilschiene (1, 3) des Zusammenbaus zu liegen zu kommen.

3. Zusammenbauvorrichtung nach Anspruch 1,
dadurch **gekennzeichnet**,
daß die beiden Wangen (8, 9) verbindenden Zweige (12) in konkaver Weise nach innen gebogen sind.
